Europäisches Patentamt

European Patent Office

Office européen des brevets

(19)

(11) **EP 0 656 473 B1**

(12) **EUROPÄISCHE PATENTSCHRIFT**

(45) Veröffentlichungstag und Bekanntmachung des Hinweises auf die Patenterteilung:
**02.05.1997 Patentblatt 1997/18**

(51) Int Cl.6: **F02M 59/36**, F02M 39/02

(21) Anmeldenummer: **94116977.3**

(22) Anmeldetag: **27.10.1994**

(54) **Verfahren zur Kraftstoffeinspritzung für eine Brennkraftmaschine mit Hochdruckeinspritzung**

Fuel injection method for an internal combustion engine with high-pressure injection

Méthode d'injection de combustible pour un moteur à combustion interne avec injection à haute pression

(84) Benannte Vertragsstaaten:
**DE FR GB IT**

(30) Priorität: **26.11.1993 DE 4340311**

(43) Veröffentlichungstag der Anmeldung:
**07.06.1995 Patentblatt 1995/23**

(73) Patentinhaber: **MERCEDES-BENZ AG**
**70327 Stuttgart (DE)**

(72) Erfinder:
- **Schittler, Michael, Dipl.-Ing.**
  **D-71065 Sindelfingen (DE)**
- **Augustin, Ulrich, Dr.**
  **D-71394 Kernen (DE)**
- **Schwarz, Volker, Dipl.-Ing.**
  **D-71384 Weinstadt (DE)**
- **Hiereth, Hermann, Dr.**
  **D-73732 Esslingen (DE)**

(56) Entgegenhaltungen:
EP-A- 0 481 964          DE-C- 3 436 768

**Beschreibung**

Die Erfindung betrifft ein Verfahren zur Kraftstoffeinspritzung für eine Brennkraftmaschine mit Hochdruckeinspritzung, mit einem von einem Pumpenkolben und einem Pumpenzylinder begrenzten Pumpenarbeitsraum, mit einer ein Magnetventil aufweisenden Steuerleitung zwischen dem Pumpenarbeitsraum und einer saugseitigen Niederdruckleitung, und mit einer ein Rückschlagventil aufweisenden Hochdruckleitung zwischen dem Pumpenarbeitsraum und wenigstens einer Kraftstoffeinspritzdüse, wobei der Beginn und das Ende der Kraftstoffeinspritzung durch Schließen und Öffnen des Magnetventils eingeleitet wird.

Aus der ATZ/MTZ Sonderheft Motor und Umwelt '92, Seite 28 ff, "Fuel Injection for Diesel", Toshihiko ist eine magnetventilgesteuerte Hochdruckpumpe bekannt, die nach Absteuerung der in den Pumpenarbeitsraum mündenden Zulaufbohrung Kraftstoff über eine mit einem Rückschlagventil versehene Hochdruckleitung in eine für alle Einspritzdüsen vorgesehene gemeinsame Versorgungsleitung (Common Rail) fördert.

Durch ein elektromagnetisch betätigbares Ventil, das in einer Rückführleitung zwischen der Hochdruckleitung und der Niederdruckleitung angeordnet ist, wird Einfluß auf eine bedarfsgeregelte Kraftstofförderung genommen.

Der Erfindung liegt die Aufgabe zugrunde, durch ein Verfahren zur Kraftstoffeinspritzung mit vorzugsweise hohen Kraftstoffdrücken zu erreichen, daß die bei jedem Einspritzvorgang nach der jeweiligen Kraftstofförderung auftretenden Druckschwingungen im Niederdruckkreislauf vermieden werden.

Zur Lösung dieser Aufgabe dienen die im Kennzeichen des Patentanspruchs 1 angegebenen Merkmale.

Dadurch, daß bei der bedarfsgeregelten Förderung das variable Förderende über die obere Totpunktlage des Pumpenstempels hinaus erfolgt, kann der Kraftstoff im Schadvolumen bereits expandieren. Somit können beim Öffnen des Magnetventiles keine Druckstöße auftreten, außerdem wird Kompressionsenergie zurückgewonnen.

Aus der DE 21 07 266 C2 ist zwar bekannt, den Kraftstoffdruck rasch abzusenken, was jedoch durch eine schrägkantengesteuerte Hochdruckpumpe nach Beendigung des wirksamen Förderhubes durch Öffnen bzw. Aufsteuern eines dem Rückströmen des Kraftstoffes in den Speicherraum dienenden Kanals erfolgt, um eine plötzliche Entlastung der Pumpe und ihres Antriebs mit sehr steilem Druckabfall im Pumpenarbeitsraum zu bewirken. Ferner ist aus der DE 34 36 768 C2 bekannt, durch ein in der Niederdruckleitung angeordnetes Magnetventil Einfluß auf eine bedarfsgeregelte Kraftstoffförderung zu nehmen, jedoch soll bei dieser Ausführung immer ein steuerbarer Kraftstoffdruck im Moment des Einspritzbeginns einer jeden Einspritzung vorliegen.

In einem Unteranspruch ist noch eine förderliche Weiterbildung der Erfindung angegeben.

Die Erfindung ist in der Zeichnung dargestellt und wird anhand eines Ausführungsbeispieles im folgenden näher erläutert. Es zeigen:

Fig. 1   an einer Brennkraftmaschine eine magnetventilgesteuerte Hochdruckpumpe sowie eine gemeinsame Versorgungsleitung und eine Kraftstoffeinspritzdüse,

Fig. 2   die Hochdruckpumpe mit Magnetventil in schematischer Darstellung und

Fig. 3   den Nockenhub über Grad Nockenwelle in grafischer Darstellung.

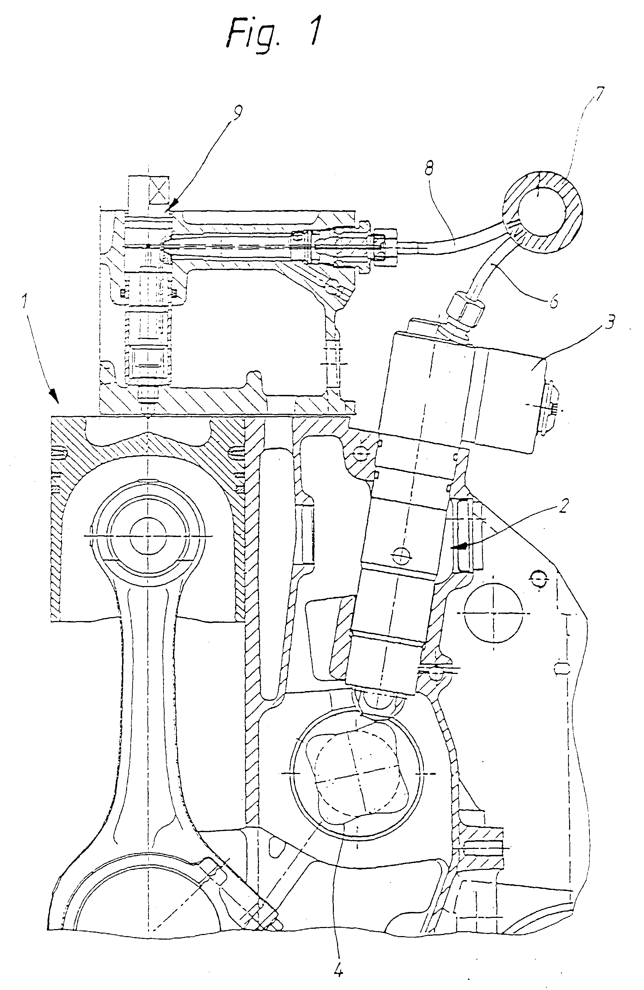

Eine mehrzylindrige luftverdichtende Brennkraftmaschine 1 gemäß Fig. 1 weist mindestens eine Hochdruckpumpe als nockenbetätigte Steckpumpe 2 mit einem Magnetventil 3 auf.

Die von vier Nocken 4 angetriebene Steckpumpe 2 fördert Kraftstoff durch eine mit einem Rückschlagventil 5 versehene Hochdruckleitung 6 zu einer gemeinsamen Versorgungsleitung 7, von der Einspritzleitungen 8 zu magnetventilgesteuerten Kraftstoffeinspritzdüsen 9 führen.

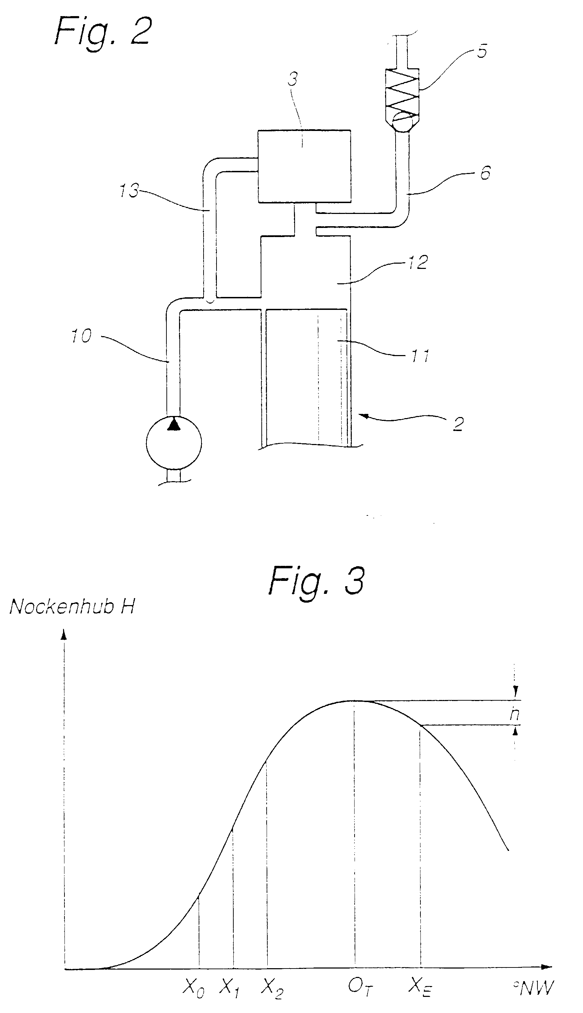

Eine Niederdruckleitung 10 mündet in den von einem Pumpenstempel 11 begrenzten Pumpenarbeitsraum 12 der Steckpumpe 2 (Fig. 2). Eine Rückführleitung 13 verbindet den Pumpenarbeitsraum 12 und die Niederdruckleitung 10 unter Zwischenschaltung des Magnetventiles 3, das von einer betriebsparameterabhängig arbeitenden elektronischen Steuereinheit (nicht dargestellt) angesteuert wird und eine bedarfsgeregelte Förderung über einen veränderlichen Förderbeginn und einem variablen Förderende ermöglicht, mit der Besonderheit, daß das Öffnen des Magnetventiles und damit das Förderende erst nach einem definierten Expansionshub h des Pumpenstempels 11 ausgehend von der oberen Totpunktlage des Pumpenstempels 11 erfolgt. In Fig. 3 ist der Nockenhub H über Grad Nockenwelle (°NW) mit dem veränderlichen Förderbeginn $X_o$, $X_1$ oder $X_2$ und mit dem variablen Förderende $X_E$ je nach gewünschter Fördermenge aufgetragen. Die obere Totpunktlage des Pumpenstempels 11 ist mit 0T und der veränderliche Expansionshub mit "h" bezeichnet.

Das Förderende $X_E$ ergibt sich aus

$$h = \frac{4 \times V_s \times P}{E \times \pi \times D^2}$$

wobei

$V_S$ =   schädliches Volumen zwischen Rückschlagventil und Pumpenstempel

$P$ =   Druck

$E$ =   E-Modul

$D$ =   Durchmesser des Pumpenstempels

ist. Der Expansionshub "h" ist neben der Pumpengeometrie vom Systemdruck abhängig.

Beim Öffnen des Magnetventiles können keine Druckstöße auftreten und Kompressionsenergie kann zurückgewonnen werden.

Als Beispiel für den Expansionshub "h" können folgende Werte eingesetzt sein:

$V_S =$ 2 000 mm$^3$
P = 1 000 bar
E = 15 000 MP
D = 10 mm

Somit ergibt sich ein Expansionshub "h" von 1,7 mm.

## Patentansprüche

1. Verfahren zur Kraftstoffeinspritzung für eine Brennkraftmaschine mit Hochdruckeinspritzung, mit einem von einem Pumpenkolben (11) und einem Pumpenzylinder begrenzten Pumpenarbeitsraum (12), mit einer ein Magnetventil (3) aufweisenden Steuerleitung (13) zwischen dem Pumpenarbeitsraum und einer saugseitigen Niederdruckleitung (10), und mit einer ein Rückschlagventil (5) aufweisenden Hochdruckleitung (6) zwischen dem Pumpenarbeitsraum und wenigstens einer Kraftstoffeinspritzdüse (9), wobei der Beginn und das Ende der Kraftstoffeinspritzung durch Schließen und Öffnen des Magnetventils (3) eingeleitet wird.
**dadurch gekennzeichnet,**
daß das Ende der Kraftstoffeinspritzung nach einem Abstand (h) nach der oberen Totpunktlage des Pumpenkolbens (11) eingeleitet wird und daß der Abstand (h) durch die Expansion des Schadvolumens zwischen dem Rückschlagventil (3) und dem Pumpenkolben (11) bestimmt ist.

2. Verfahren nach Anspruch 1,
**dadurch gekennzeichnet,**
daß der Abstand (h) durch die Expansion des Schadvolumens auf den Saugdruck in der Niederdruckleitung bestimmt ist.

## Claims

1. A process for the injection of fuel for an internal combustion engine with high pressure injection, with a pump action chamber (12) bounded by a pump piston (11) and a pump cylinder, with a control line (13) featuring a solenoid valve (3) between the pump action chamber and an inlet-side low pressure line (10), and with a high pressure line (6) featuring a return valve (5) between the pump action chamber and at least one fuel injection nozzle (9), whereby the start and the end of fuel injection are triggered by the closing and opening of the solenoid valve (3),
**characterised in that**
the end of fuel injection is triggered at a distance (h) after the upper dead centre of the pump piston (11) and that the distance (h) is determined by the expansion of the damage volume between the return valve (5) and the pump piston (11).

2. A process in accordance with Claim 1,
**characterised in that**
the distance (h) is determined by the expansion of the damage volume on the suction pressure in the low pressure line.

## Revendications

1. Méthode d'injection de carburant pour un moteur à combustion interne à injection sous haute pression, comportant une chambre de travail (12) de la pompe limitée par un piston (11) de pompe et un cylindre de pompe, ainsi qu'une conduite de commande (13), présentant une électrovanne (3), entre la chambre de travail de la pompe et une conduite basse pression (10) côté aspiration et qu'une conduite haute pression (6), présentant un clapet de non-retour (5), entre la chambre de travail (12) de la pompe et au moins un injecteur de carburant (9), le début et la fin de l'injection de carburant étant provoqués par la fermeture et l'ouverture de l'électrovanne (3),
caractérisée
par le fait que la fin de l'injection de carburant est provoquée après une certaine distance parcourue (h) après la position de point mort haut du piston de la pompe (11) et que la distance parcourue (h) est déterminée par l'expansion du volume mort entre le clapet de non-retour (3) et le piston (11) de la pompe.

2. Méthode selon la revendication 1,
caractérisée
par le fait que la distance parcourue (h) est déterminée par l'expansion du volume mort pour obtenir la pression d'admission dans la conduite basse pression.

## Fig. 1

## Fig. 2

## Fig. 3

5